# EUROPÄISCHE PATENTSCHRIFT

(11) **EP 1 090 734 B1**
(45) Veröffentlichungstag und Bekanntmachung des Hinweises auf die Patenterteilung: **26.05.2004**
(21) Anmeldenummer: 00120350.4
(22) Anmeldetag: 16.09.2000
(51) Int. Cl.: B29C 45/53, B29C 45/54, B29C 45/02

(54) **Verfahren und Vorrichtung zum Spritzgiessen von Kunststoff-Formteilen**
Method and apparatus for injection moulding of plastic parts
Procédé et dispositif pour mouler par injection des pièces en matière plastique

(30) Priorität: 06.10.1999 DE 19948279
(43) Veröffentlichungstag der Anmeldung: 11.04.2001
(73) Patentinhaber: Battenfeld GmbH, D-58540 Meinerzhagen (DE)
(72) Erfinder: Eckardt, Helmut, Dipl.-Ing., 58540 Meinerzhagen (DE); Stemke, Lothar, 04720 Döbeln (DE)

(56) Entgegenhaltungen:
- EP-A- 0 510 414
- WO-A-00/06359
- WO-A-00/24560
- DE-A- 2 128 373
- FR-A- 1 262 619
- FR-A- 2 469 270
- PATENT ABSTRACTS OF JAPAN vol. 17, no. 159 (M-1389), 29. März 1993 (1993-03-29) -& JP 04 325216 A (TOYODA GOSEI CO LTD), 13. November 1992 (1992-11-13)

## Beschreibung

Die Erfindung betrifft ein Verfahren zum Spritzgießen von Kunststoff-Formteilen, bei dem Kunststoffschmelze zur Ausbildung eines Kunststoff-Formteils in ein Spritzgießwerkzeug eingespritzt wird. Des weiteren betrifft die Erfindung eine Vorrichtung zum Spritzgießen von Kunststoff-Formteilen.

Verfahren und Vorrichtungen zum Spritzgießen von Kunststoff-Formteilen sind im Stand der Technik hinlänglich bekannt. Beispielsweise ist aus der **WO 98/09768** eine Spritzgießvorrichtung bekannt, bei der - anstatt des sonst üblichen direkten Einspritzens von Kunststoffschmelze aus der Plastifizier- und Einspritzeinheit - Schmelze in einen Aufnahmeraum eingebracht wird und anschließend diese mittels eines Stempels in die Werkzeugkavität gedrückt wird. Damit wird eine Reduzierung des Betriebsdrucks in der Schmelze erreicht. Die dort beschriebene Lösung weist einen Aufnahmeraum zur Aufnahme der für einen Schuß benötigen Kunststoffschmelze auf, wobei der Kunststoff durch einen beheizten Durchgang mittels einer Zuführspindel in eine Röhre und dann mit einem Stempel in den Aufnahmeraum verschoben wird. Anschließend wird die Aufnahmeeinheit in eine zweite Stellung verschoben, in der der Aufnahmeraum mit einer Öffnung des Werkzeugs fluchtet. In dieser Position drückt dann ein zweiter Stempel die Kunststoffschmelze in die Formkavität.

Aus der **JP 04 325 216 A** ist eine Anordnung bekannt, bei der Schmelze über einen Schmelzefließweg in einen Sammelraum gebracht wird und anschließend die gesamte Einheit samt Einlegeteil in eine zweite Hälfte eines Spritzgeßwerzeuges zubewegt wird und nach Überwindung einer Federkraft die Schmelze in die Kavität eingebracht wird.

Die **WO 00/6359** offenbart die Möglichkeit, mittels.eines Stößels eine Schnecke axial zu bewegen und gleichzeitig den Materialfluß zu unterbinden. Ein Drehverschluß sperrt den Schmelzesammelraum ab, bevor die Masse ins Werkzeug eingebracht wird.

Ebenfalls in zwei Stufen wird gemäß der **FR-A-955 413** in das Werkzeug eingebracht. Nach dem Plastifizieren wird das Material in eine Kolben/Zylinderanordnung übergeben und mittels des Kolbens in das Formnest eingebracht. Dies schlägt auch die **US 3,723,037** in ähnlicher Weise vor. Weitere bekannte Verfahren und Vorrichtungen, die die Schmelze in zwei Stufen in die Form einbringen, sind in den Schriften **FR-A 1 262 619, DE 2128 373 A** und **GB 1 034 948** offenbart.

Wie auch bei diesen speziellen vorbekannten Lösung gilt generell, daß beim Spritzgießen stets über eine gewisse Fließweglänge das Kunststoffmaterial in das Werkzeug eingebracht werden muß. Aufgrund der Rheologie und der jeweiligen Fülltechnik ergibt es sich, daß am Anspritzpunkt ein hoher Druck zum Einspritzen der Schmelze aufgebracht werden muß, der dann entlang des Fließweges deutlich abnimmt. Am Fließwegende tritt infolge des Druckverlustes nur noch ein deutlich geringerer Druck als am Einspritzpunkt auf. Dieser Druckverlust über den Fließweg führt dazu, daß im Einspritzpunkt sehr hohe Drücke erforderlich sind, um sicherzustellen, daß auch am Fließwegende das notwendige Druckniveau vorliegt, das für ein vollständiges Füllen der Werkzeugkavität benötigt wird.

Um bei langen Fließwegen die sich ergebenden hohen Druckverluste zu minimieren, ist es üblich, Formteile auch mehrfach anzuspritzen. D. h. die Formkavität wird mit mehreren Anspritzpunkten versehen. Nachteilig hierbei ist es jedoch, daß sich an den Stellen, an denen die unterschiedlichen Fließfronten aufeinandertreffen, Bindenähte bilden, die eine mechanische Schwächung des Formteils bedingen. Weiterhin ist es nachteilhaft, daß durch mehrere Einspritzpunkte sehr stark unterschiedliche Druckverhältnisse an verschiedenen Positionen der Formkavität vorliegen.

Zur Abhilfe sind hierzu Verfahren bekannt, die zum Ziel haben, die Innendrücke im Werkzeug zu reduzieren. Ein derartiges Verfahren ist die Spritzprägetechnik, bei der mit Tauchkanten-Werkzeugen gearbeitet wird. So wird beispielsweise mit vergrößerter Wanddicke die gewünschte Kunststoffmasse eingespritzt und dann über den Schließmechanismus der Spritzgießmaschine das Werkzeug zusammengefahren. Die Wanddicke wird dadurch reduziert, daß ein Prägevorgang ausgeführt wird. Dadurch ist es möglich, einen gleichmäßigen Prägedruck, auch zum Fließwegende hin, sicherzustellen. Bei anderen Verfahren wird der Einspritzvorgang zunächst mit einer geringen Wanddicke begonnen; beim Einspritzen des Kunststoffmaterials in die Werkzeugkavität wird dann die Wanddicke des Formteils vergrößert, bis die gewünschte Formmasse gänzlich eingespritzt ist. Anschließend wird die Schließkraft auf das Werkzeug aufgebracht und die Wanddicke auf das gewünschte Maß reduziert.

Nachteilig ist bei all den vorbekannten Verfahren, daß besondere Werkzeugtechniken und/oder Verfahrensabläufe benötigt werden, um möglichst geringe und gleichbleibende Drücke in der Werkzeugkavität sicherzustellen. Das bedingt einen recht großen apparativen und verfahrenstechnischen Aufwand. Weiterhin sind gegebenenfalls Einschränkungen hinsichtlich der Formteilgeometrie in Kauf zu nehmen.

Der vorliegenden Erfindung liegt daher die **Aufgabe** zugrunde, ein Verfahren und eine zugehörige Vorrichtung zum Spritzgießen von Kunststoff-Formteilen zu schaffen, die die vorbekannten Nachteile vermeiden oder zumindest reduzieren. Es sollen also die Vorteile der bekannten Spritzprägetechnik ausgenutzt werden, ohne deren Nachteile in Kauf nehmen zu müssen. Des weiteren soll ein Augenmerk darauf gerichtet sein, daß bestehende Spritzgießmaschinen ohne großen Aufwand entsprechend umgerüstet werden können.

Die **Lösung** dieser Aufgabe durch die Erfindung ist verfahrensgemäß durch folgende Schritte gekennzeichnet:
a) Plastifizieren von Kunststoffmaterial in einer Plastifiziereinheit (2) und Ansammeln der Kunststoffschmelze in einem ersten Schmelzesammelraum (3), wobei der erste Sammelraum (3) innerhalb der Plastifiziereinheit (2) angeordnet ist;
b) Austreiben der kumulierten Kunststoffschmelze entlang eines Schmelzefließweges (4) in einen zweiten Schmelzesammelraum (5), der von einem kolbenartigen Abschlußbereich (6) begrenzt wird, wobei der zweite Schmelzesammelraum (4) in einem Spritzgießwerkzeug (1) angeordnet und der kolbenartige Abschlußbereich (6) Teil der Plastifiziereinheit (2) ist;
c) Austreiben der im zweiten Schmelzesammelraum (5) kumulierten Kunststoffschmelze in das Spritzgießwerkzeug (1),
wobei gleichzeitig weiteres Plastifizieren von Kunststoffmaterial gemäß Verfahrensschritt a) möglich ist ;
wobei der kolbenartige Abschlußbereich (6) des zweiten Schmelzesammelraums (5) beim Austreiben der Kunststoffschmelze gemäß Schritt c) derart verschoben wird, daß er einen Teil der Kavitätswand (7) des Spritzgießwerkzeugs (1) bildet.

Der Grundgedanke der Erfindung stellt also darauf ab, daß die einzuspritzende Schmelze zunächst in einem ersten Sammelraum kumuliert wird. Dann wird das einzuspritzende Material in einen zweiten Sammelraum übergeleitet, der durch eine Kolbenfläche begrenzt wird. Beim anschließenden Einspritzen der Schmelze in die Werkzeugkavität wird der Kolben derart verschoben, daß er schließlich einen Bereich der eigentlichen Werkzeugkavität bildet. Dabei bildet die Kolbenfläche einen gewissen Anteil der (in Kolbenverschieberichtung betrachteten projizierten) Fläche, über die sich der Einspritzdruck gleichmäßig verteilen kann. Es kommt dadurch zu einer Vergleichmäßigung der Druckverteilung in der Werkzeugkavität. Die benötigten Einspritzdrücke können reduziert werden, was die eingangs beschriebenen Nachteile vermeidet oder zumindest reduziert.

Gemäß einer ersten Fortbildung ist vorgesehen, daß der erste Schmelzesammelraum (3) als Schneckenvorraum einer Schubschnecken-Plastifizier- und -Einspritzeinheit (2) ausgebildet ist, wobei die Schubschnecke (8) eine intermittierende Axialbewegung ausführt. Alternativ hierzu kann vorgesehen werden, daß der erste Schmelzesammelraum (3) als Schmelzespeicherraum ausgebildet ist, der zumindest zeitweise fluidisch mit einer Plastifizierschnecke in Verbindung steht und aus dem Schmelze durch Bewegung eines Kolbens ausgetrieben werden kann. Das erfindungsgemäße Verfahren eignet sich also sowohl für übliche Schubschnecken als auch für die Aufbereitung von Kunststoffschmelze in Schmelzespeicherräumen.

Vorteilhafterweise befindet sich der kolbenartige Abschlußbereich (6) des zweiten Schmelzesammelraums (5) vor Beginn des Austreibens der Kunststoffschmelze in das Spritzgießwerkzeug (1) in einer Endlage (9).

Der genauen Steuerung und Regelung kommt beim erfindungsgemäßen Verfahren eine gewisse Bedeutung zu, diese können jedoch mit üblichen Spritzgießvorrichtungen des Standes der Technik in einfacher Weise durchgeführt werden. Dabei ist bevorzugt vorgesehen, daß das Austreiben der kumulierten Kunststoffschmelze entlang des Schmelzefließweges (4) in den zweiten Schmelzesammelraum (5) und/oder das Austreiben der im zweiten Schmelzesammelraum (5) kumulierten Kunststoffschmelze in das Spritzgießwerkzeug (1) zumindest zeitweise gesteuert oder geregelt erfolgt. Insbesondere ist vorgesehen, daß die Regelung des Austreibens der kumulierten Kunststoffschmelze entlang des Schmelzefließweges (4) in den zweiten Schmelzesammelraum (5) und das Austreiben der im zweiten Schmelzesammelraum (5) kumulierten Kunststoffschmelze in das Spritzgießwerkzeug (1) gemäß den Querschnittsverhältnissen des Kolbens bzw. der Schnecke (8) im ersten Schmelzesammelraum (3) und dem kolbenartigen Abschlußbereichs (6) erfolgt. Weiterhin ist es vorteilhaft, wenn vorgesehen wird, daß die Regelung bzw. Steuerung in Abhängigkeit des Schmelzedrucks im ersten (3) bzw. zweiten (5) Schmelzesammelraum erfolgt. Schließlich kann vorgesehen werden, daß die Regelung bzw. Steuerung zeit-, weg- oder druckabhängig erfolgt.

Weiterbildungsgemäß kann vorgesehen werden, daß der Nachdruck auf die Schmelze nach dem Austreiben der im zweiten Schmelzesammelraum (5) kumulierten Kunststoffschmelze in das Spritzgießwerkzeug (1) über den kolbenartigen Abschlußbereich (6) des zweiten Schmelzesammelraums (5) aufgebracht wird.

Eine Verfahrensverbesserung ergibt sich, wenn der Bereich des kolbenartigen Abschlußbereichs (6) des zweiten Schmelzesammelraums (5) zumindest zeitweise temperiert wird. Dabei kommt sowohl eine gezielte Beheizung als auch eine Kühlung in Frage.

Das Verfahren kann auch mit speziellen Fertigungsverfahren kombiniert werden. Dann ist namentlich vorgesehen, daß beim Austreiben der im zweiten Schmelzesammelraum (5) kumulierten Kunststoffschmelze in das Spritzgießwerkzeug (1) eine dort positionierte Folie hinterspritzt wird. Alternativ ist es möglich, daß beim Austreiben der im zweiten Schmelzesammelraum (5) kumulierten Kunststoffschmelze in das Spritzgießwerkzeug (1) ein dort positioniertes Textilmaterial hinterspritzt wird. Es ist somit mit diesem Verfahren möglich jede Art von Einlegeteilen zu hinterspritzen.

Schließlich ist es möglich, auch die Prägetechnik einzusetzen; dann wird nach dem Austreiben der im zweiten Schmelzesammelraum (5) kumulierten Kunststoffschmelze in das Spritzgießwerkzeug (1) durch den kolbenartigen Abschlußbereich (6) ein Prägevorgang ausgeführt.

Die erfindungsgemäße Vorrichtung zum Spritzgießen von Kunststoff-Formteilen, insbesondere zur Durchführung des beschriebenen Verfahrens, weist folgende Elemente auf:
- eine Plastifiziereinheit (2) zum Plastifizieren von Kunststoffmaterial,
- einen ersten Schmelzesammelraum (3), in den die von der Plastifiziereinheit (2) hergestellte Kunststoffschmelze gesammelt wird, wobei der erste Sammelraum (3) innerhalb der Plastifiziereinheit (2) angeordnet ist und
- ein Spritzgießwerkzeug (1) mit einer Werkzeugkavität (10),
Erfindungsgemäß ist die Vorrichtung gekennzeichnet durch
- einen Schmelzefließweg (4), der vom ersten Schmelzesammelraum (3) zu einem zweiten Schmelzesammelraum (5) führt, wobei der zweite Schmelzesammelraum (5) von einem kolbenartigen Abschlußbereich (6) begrenzt wird, wobei der zweite Schmelzesammelraum (4) in einem Spritzgießwerkzeug (1) angeordnet und der kolbenartige Abschlußbereich (6) Teil der Plastifiziereinheit (2) ist,
wobei der kolbenartige Abschlußbereich (6) des zweiten Schmelzesammelraums (5) so geformt ist, daß er zumindest einen Teil der Kavitätswand (7) des Spritzgießwerkzeugs (1) bildet.

Die Vorrichtung macht also von den entsprechenden Merkmalen des erfindungsgemäßen Verfahrens Gebrauch.

Bevorzugt ist vorgesehen, daß im Bereich des kolbenartigen Abschlußbereichs (6) des zweiten Schmelzesammelraums (5) Mittel zum Temperieren (11) angeordnet sind.

Der erste Schmelzesammelraum (3) kann als Schneckenvorraum einer Schubschnecken-Plastifizier- und -Einspritzeinheit (2) ausgebildet sein. Alternativ ist es möglich, daß der erste Schmelzesammelraum (3) als Schmelzespeicherraum ausgebildet ist, der über eine fluidische Leitung mit einer Plastifizierschnecke in Verbindung steht.

Zur besseren Steuerung bzw. Regelung des Verfahrens kann vorgesehen sein, daß in den Schmelzefließweg (4), der vom ersten Schmelzesammelraum (3) zum zweiten Schmelzesammelraum (5) führt, Ventilmittel (12) angeordnet sind, mit denen die fluidische Verbindung (4) unterbrochen und freigegeben werden kann.

Bevorzugt ist an eine konstruktive Ausgestaltung gedacht, bei der der kolbenartigen Abschlußbereich (6) des zweiten Schmelzesammelraums (5) als Endstück eines Schneckenzylinders (13) ausgebildet ist, in dem eine axialverschieblich in diesem angeordnete Plastifizier- und Schubschnecke (8) angeordnet ist. Weiterhin kann dann vorgesehen sein, daß der Schneckenzylinder (13) mit Bewegungsmitteln (14) in Verbindung steht, mit denen der Schneckenzylinder (13) relativ zum Spritzgießwerkzeug (1) bewegt werden kann. Es wird somit die Schmelze aus dem zweiten Schmelzesammelraum (5) in die Kavität (10) ausgetrieben.

Die Reduzierung des Drucks in der Kavität wird besonders vorteilhaft bewerkstelligt, wenn die projizierte Fläche (A_{K}) des kolbenartigen Abschlußbereichs (6) in seiner Verschieberichtung (R) einen Anteil von mindestens 0.5 %, vorzugsweise mindestens 5 %, der projizierten Fläche (A_{G}) der gesamten Kavitätswand (7) in der Verschieberichtung (R) beträgt.

In der Zeichnung sind Ausführungsbeispiele der erfindungsgemäßen Lösung dargestellt.
- Fig. 1: zeigt schematisch eine Spritzgießvorrichtung während eines frühen Verfahrensschrittes, in
- Fig. 2: ist die Spritzgießvorrichtung während eines späteren Verfahrensschrittes dargestellt,
- Fig. 3: zeigt die Spritzgießvorrichtung während eines noch späteren Verfahrensschrittes.
- Fig. 4: stellt eine Lösung mit einem Schmelzespeicher anstelle einer Schubschnecke dar,
- Fig. 5: zeigt das erfindungsgemäße Konzept, angewendet auf zwei Spritzgießwerkzeuge.

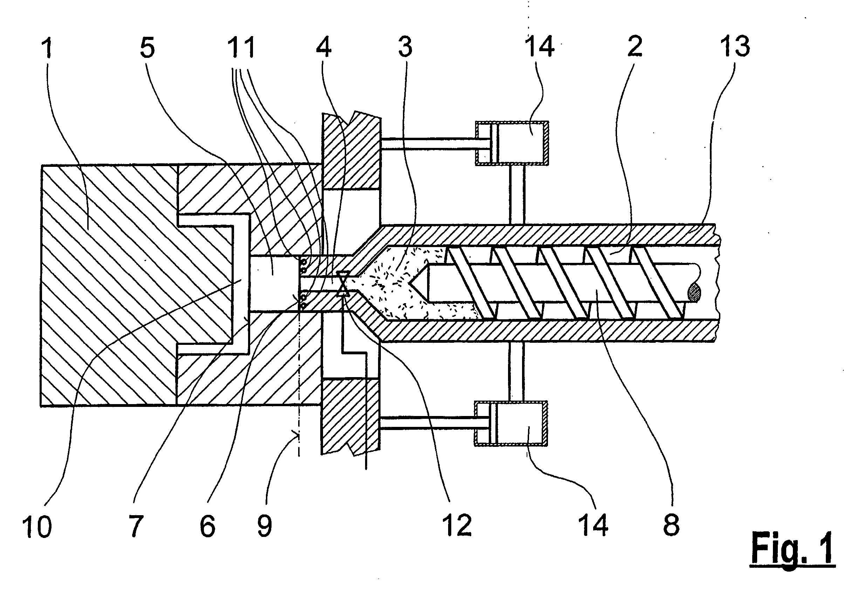

Die Spritzgießvorrichtung, die in Fig. 1 dargestellt ist, ermöglicht die Durchführung des erfindungsgemäßen Verfahrens. Das Spritzgießwerkzeug 1 schließt in bekannter Weise eine Kavität 10 ein, in die Kunststoffmaterial eingespritzt wird. Das Material wird von einer Plastifiziereinheit 2 aufgeschmolzen, wobei in bekannter Weise eine Schnecke 8 als Schubschnecke in einem Schneckenzylinder 13 angeordnet ist.

Der Schneckenvorraum "vor" der Schnecke 8 bildet einen ersten Schmelzesammelraum 3. Die Schmelze kann über einen Schmelzefließweg 4 vom ersten Schmelzesammelraum 3 in den zweiten Schmelzesammelraum 5 überfließen. Dies kann in gesteuerter bzw. geregelter Weise durch die Ventilmittel 12 erfolgen, wobei diese Mittel jedoch nicht notwendigerweise erforderlich sind.

Das Ende des Schneckenzylinders 13 ist als kolbenartiger Abschlußbereich 6 ausgebildet. D. h. beim Verschieben des Schneckenzylinders 13 - namentlich durch die Bewegungsmittel 14 - wirkt das Ende des Schnekkenzylinders 13 als Kolben in einer nicht näher bezeichneten zylindrischen Buchse, die in das Spritzgießwerkzeug 1 integriert ist.

Für eine Temperierung des kolbenartigen Abschlußbereichs 6 sorgen die Mittel 11. Diese können sowohl eine gezielte Beheizung als auch ein Kühlung bewerkstelligen, was im konkreten Einzelfall von der Rheologie und vom zu verarbeitenden Kunststoff abhängt.

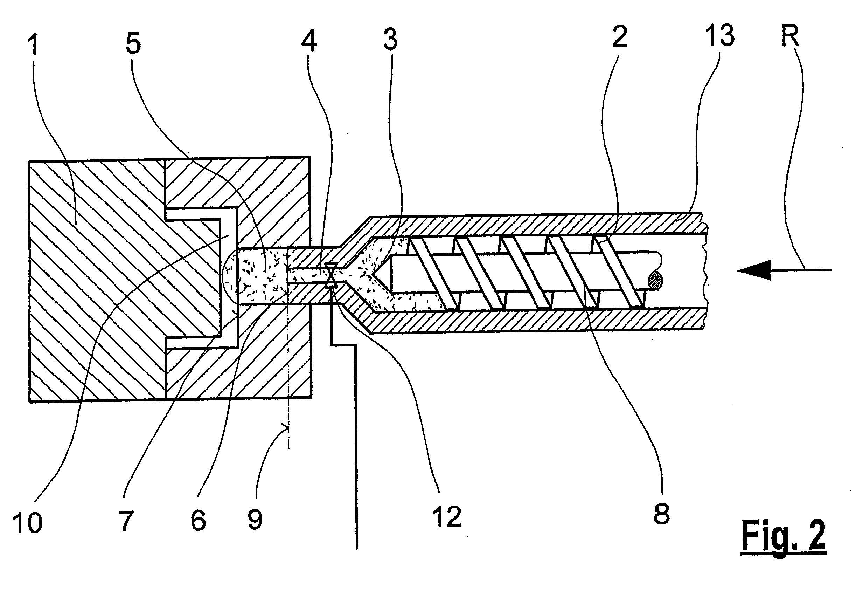

Fig. 1 stellt einen frühen Verfahrenszustand dar: Es wurde bereits Schmelze durch die Schnecke 8 plastifiziert und im ersten Schmelzesammelraum 3 kumuliert. Bevorzugt befindet sich - was nicht dargestellt ist - der kolbenartige Abschlußbereich 6 zunächst in einer solchen Position, daß der Bereich 6 bündig mit der Kavitätswand 7 abschließt (also ganz "links"). In dem Maße, wie Schmelze über den Fließweg 4 vom ersten Sammelraum 3 in den zweiten Sammelraum 5 überströmt, wird der kolbenartige Abschlußbereich 6 "nach rechts" bewegt, so daß das für die Schmelze benötigte Volumen vor dem Abschlußbereich 6 gebildet wird. Dies erfolgt so lange, bis sich der Abschlußbereich 6 in einer Endlage 9 befindet. Dieser Zustand ist in Fig. 2 dargestellt.

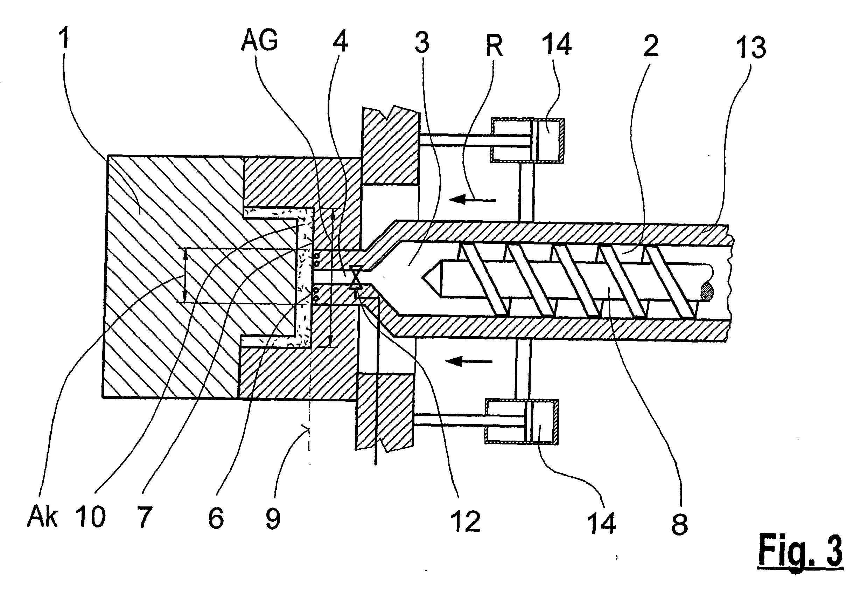

In Fig. 3 ist zu sehen, wie der Kolben am Ende des Schneckenzylinders 13 von der Endlage 9 "nach links" in Richtung R verschoben wurde, wodurch die im zweiten Sammelraum 5 eingeschlossene Schmelze in die Kavität 10 injiziert wurde.

Wie an dem Ausführungsbeispiel zu sehen ist, stellt die Fläche des kolbenartigen Abschlußbereichs 6 A_{K} einen erheblichen Teil der insgesamt projizierten Fläche A_{G} des zu spritzenden Formteils dar. Dadurch verteilt sich der durch die Kolbenfläche 6 aufgebracht Druck gleichmäßig über die gesamte projizierte Formteilfläche in weit besserer Weise als im Stand der Technik.

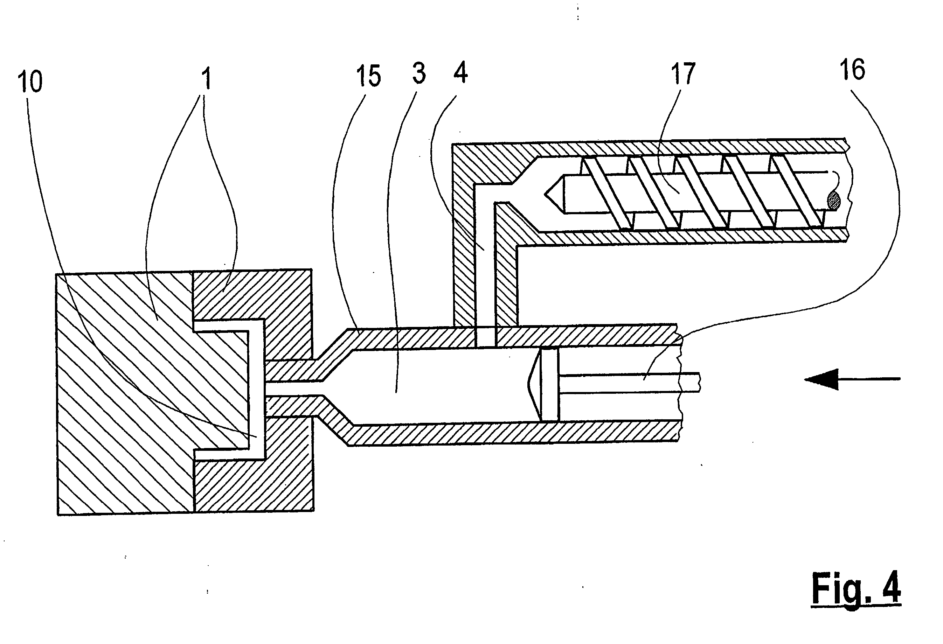

In Fig. 4 ist zu sehen, daß alternativ auch ein Schmelzespeicher 15 zum Einsatz kommen kann, in dem ein Kolben 16 für das Ausbringen des Kunststoffmaterials sorgen kann. Der Schmelzespeicher 15 steht dabei in fluidischer Verbindung mit einer Plastifiziereinheit 17, von der aus Kunststoffschmelze in den Schmelzespeicher 15 gelangt. Im Schmelzefließweg 4 können ebenfalls Ventilmittel 12 vorgesehen werden.

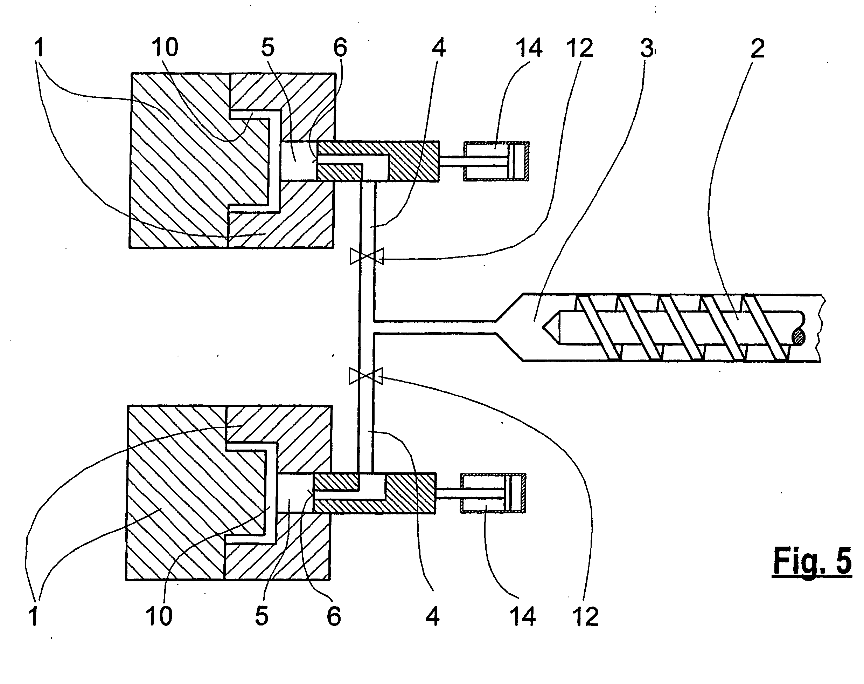

Besonders vorteilhaft und wirtschaftlich wird die gegenständliche Idee bei der Lösung gemäß Fig. 5 eingesetzt. Dort ist zu sehen, daß zwei Spritzgießwerkzeuge 1 über einen entsprechenden Schmelzeverteiler mit Schmelze versorgt werden. Damit können gleichzeitig zwei oder mehrere Kavitäten mit Schmelze versorgt werden. Alternativ ist es freilich auch möglich - dieser Fall ist jedoch nicht gezeigt -, daß im Sinne der Lösung von Fig. 5 zwei unterschiedliche Anspritzstellen an ein und derselben Kavität versorgt werden. Damit kann, namentlich bei großen Formteilen, erreicht werden, daß über eine große Formteilfläche vergleichmäßigte Druckverhältnisse herrschen.

### Bezugszeichenliste:

- 1: Spritzgießwerkzeug
- 2: Plastifiziereinheit
- 3: erster Schmelzesammelraum
- 4: Schmelzefließweg
- 5: zweiter Schmelzesammelraum
- 6: kolbenartiger Abschlußbereich
- 7: Kavitätswand
- 8: Schnecke
- 9: Endlage
- 10: Kavität
- 11: Mittel zum Temperieren
- 12: Ventilmittel
- 13: Schneckenzylinder
- 14: Bewegungsmittel
- 15: Schmelzespeicher
- 16: Kolben
- 17: Plastifiziereinheit

- R: Verschieberichtung des kolbenartigen Abschlußbereichs
- A_{K}: Fläche des kolbenartigen Abschlußbereichs
- A_{G}: Fläche der gesamten Kavitätswand

## Patentansprüche

1. Verfahren zum Spritzgießen von Kunststoff-Formteilen, bei dem Kunststoffschmelze zur Ausbildung eines Kunststoff-Formteils in ein Spritzgießwerkzeug (1) eingespritzt wird, wobei das Verfahren die Schritte aufweist:
a) Plastifizieren von Kunststoffmaterial in einer Plastifiziereinheit (2) und Ansammeln der Kunststoffschmelze in einem ersten Schmelzesammelraum (3), wobei der erste Sammelraum (3) innerhalb der Plastifiziereinheit (2) angeordnet ist;
b) Austreiben der kumulierten Kunststoffschmelze entlang eines Schmelzefließweges (4) in einen zweiten Schmelzesammelraum (5), der von einem kolbenartigen Abschlußbereich (6) begrenzt wird, wobei der zweite Schmelzesammelraum (4) in einem Spritzgießwerkzeug (1) angeordnet und der kolbenartige Abschlußbereich (6) Teil der Plastifiziereinheit (2) ist;
c) Austreiben der im zweiten Schmelzesammelraum (5) kumulierten Kunststoffschmelze in das Spritzgießwerkzeug (1),
wobei gleichzeitig weiteres Plastifizieren von Kunststoffmaterial gemäß Verfahrensschritt a) möglich ist ;
wobei der kolbenartige Abschlußbereich (6) des zweiten Schmelzesammelraums (5) beim Austreiben der Kunststoffschmelze gemäß Schritt c) derart verschoben wird, daß er einen Teil der Kavitätswand (7) des Spritzgießwerkzeugs (1) bildet.

2. Verfahren nach Anspruch 1, **dadurch gekennzeichnet, daß** der erste Schmelzesammelraum (3) als Schneckenvorraum einer Schubschnecken-Plastifizier- und -Einspritzeinheit (2) ausgebildet ist, wobei die Schubschnecke (8) eine intermittierende Axialbewegung ausführt.

3. Verfahren nach Anspruch 1, **dadurch gekennzeichnet, daß** der erste Schmelzesammelraum (3) als Schmelzespeicherraum ausgebildet ist, der zumindest zeitweise fluidisch mit einer Plastifizierschnecke in Verbindung steht und aus dem Schmelze durch Bewegung eines Kolbens ausgetrieben werden kann.

4. Verfahren nach einem der Ansprüche 1 bis 3, **dadurch gekennzeichnet, daß** sich der kolbenartige Abschlußbereich (6) des zweiten Schmelzesammelraums (5) vor Beginn des Austreibens der Kunststoffschmelze in das Spritzgießwerkzeug (1) in einer Endlage (9) befindet.

5. Verfahren nach einem der Ansprüche 1 bis 4, **dadurch gekennzeichnet, daß** das Austreiben der kumulierten Kunststoffschmelze entlang des Schmelzefließweges (4) in den zweiten Schmelzesammelraum (5) und/oder das Austreiben der im zweiten Schmelzesammelraum (5) kumulierten Kunststoffschmelze in das Spritzgießwerkzeug (1) zumindest zeitweise gesteuert oder geregelt erfolgt.

6. Verfahren nach Anspruch 5, **dadurch gekennzeichnet, daß** die Regelung des Austreibens der kumulierten Kunststoffschmelze entlang des Schmelzefließweges (4) in den zweiten Schmelzesammelraum (5) und das Austreiben der im zweiten Schmelzesammelraum (5) kumulierten Kunststoffschmelze in das Spritzgießwerkzeug (1) gemäß den Querschnittsverhältnissen des Kolbens bzw. der Schnecke (8) im ersten Schmelzesammelraum (3) und dem kolbenartigen Abschlußbereichs (6) erfolgt.

7. Verfahren nach Anspruch 5 oder 6, **dadurch gekennzeichnet, daß** die Regelung bzw. Steuerung in Abhängigkeit des Schmelzedrucks im ersten (3) bzw. zweiten (5) Schmelzesammelraum erfolgt.

8. Verfahren nach einem der Ansprüche 5 bis 7, **dadurch gekennzeichnet, daß** die Regelung bzw. Steuerung zeit-, weg- oder druckabhängig erfolgt.

9. Verfahren nach einem der Ansprüche 1 bis 8, **dadurch gekennzeichnet, daß** der Nachdruck auf die Schmelze nach dem Austreiben der im zweiten Schmelzesammelraum (5) kumulierten Kunststoffschmelze in das Spritzgießwerkzeug (1) über den kolbenartigen Abschlußbereich (6) des zweiten Schmelzesammelraums (5) aufgebracht wird.

10. Verfahren nach einem der Ansprüche 1 bis 9, **dadurch gekennzeichnet, daß** der Bereich des kolbenartigen Abschlußbereich (6) des zweiten Schmelzesammelraums (5) zumindest zeitweise temperiert wird.

11. Verfahren nach einem der Ansprüche 1 bis 10, **dadurch gekennzeichnet, daß** beim Austreiben der im zweiten Schmelzesammelraum (5) kumulierten Kunststoffschmelze in das Spritzgießwerkzeug (1) eine dort positionierte Folie hinterspritzt wird.

12. Verfahren nach einem der Ansprüche 1 bis 10, **dadurch gekennzeichnet, daß** beim Austreiben der im zweiten Schmelzesammelraum (5) kumulierten Kunststoffschmelze in das Spritzgießwerkzeug (1) ein dort positioniertes Textilmaterial hinterspritzt wird.

13. Verfahren nach einem der Ansprüche 1 bis 12, **dadurch gekennzeichnet, daß** nach dem Austreiben der im zweiten Schmelzesammelraum (5) kumulierten Kunststoffschmelze in das Spritzgießwerkzeug (1) durch den kolbenartigen Abschlußbereich (6) ein Prägevorgang ausgeführt wird.

14. Vorrichtung zum Spritzgießen von Kunststoff-Formteilen, insbesondere zur Durchführung des Verfahrens nach einem der Ansprüche 1 bis 13, die aufweist:
- eine Plastifiziereinheit (2) zum Plastifizieren von Kunststoffmaterial,
- einen ersten Schmelzesammelraum (3), in den die von der Plastifiziereinheit (2) hergestellte Kunststoffschmelze gesammelt wird, wobei der erste Sammelraum (3) innerhalb der Plastifiziereinheit (2) angeordnet ist und
- ein Spritzgießwerkzeug (1) mit einer Werkzeugkavität (10),
**gekennzeichnet durch**
- einen Schmelzefließweg (4), der vom ersten Schmelzesammelraum (3) zu einem zweiten Schmelzesammelraum (5) führt, wobei der zweite Schmelzesammelraum (5) von einem kolbenartigen Abschlußbereich (6) begrenzt wird, wobei der zweite Schmelzesammelraum (4) in einem Spritzgießwerkzeug (1) angeordnet und der kolbenartige Abschlußbereich (6) Teil der Plastifiziereinheit (2) ist,
wobei der kolbenartige Abschlußbereich (6) des zweiten Schmelzesammelraums (5) so geformt ist, daß er zumindest einen Teil der Kavitätswand (7) des Spritzgießwerkzeugs (1) bildet.

15. Vorrichtung nach Anspruch 14, **dadurch gekennzeichnet, daß** im Bereich des kolbenartigen Abschlußbereichs (6) des zweiten Schmelzesammelraums (5) Mittel zum Temperieren (11) angeordnet sind.

16. Vorrichtung nach Anspruch 14 oder 15, **dadurch gekennzeichnet, daß** der erste Schmelzesammelraum (3) als Schneckenvorraum einer Schubschnecken-Plastifizier- und -Einspritzeinheit (2) ausgebildet ist.

17. Vorrichtung nach Anspruch 14 oder 15, **dadurch gekennzeichnet, daß** der erste Schmelzesammelraum (3) als Schmelzespeicherraum ausgebildet ist, der über eine fluidische Leitung mit einer Plastifizierschnecke in Verbindung steht.

18. Vorrichtung nach einem der Ansprüche 14 bis 17, **dadurch gekennzeichnet, daß** in den Schmelzefließweg (4), der vom ersten Schmelzesammelraum (3) zum zweiten Schmelzesammelraum (5) führt, Ventilmittel (12) angeordnet sind, mit denen die fluidische Verbindung (4) unterbrochen und freigegeben werden kann.

19. Vorrichtung nach einem der Ansprüche 14 bis 18, **dadurch gekennzeichnet, daß** der kolbenartigen Abschlußbereich (6) des zweiten Schmelzesammelraums (5) als Endstück eines Schneckenzylinders (13) ausgebildet ist, in dem eine axialverschieblich in diesem angeordnete Plastifizier- und Schubschnecke (8) angeordnet ist.

20. Vorrichtung nach Anspruch 19, **dadurch gekennzeichnet, daß** der Schneckenzylinder (13) mit Bewegungsmitteln (14) in Verbindung steht, mit denen der Schneckenzylinder (13) relativ zum Spritzgießwerkzeug (1) bewegt werden kann.

21. Vorrichtung nach einem der Ansprüche 14 bis 20, **dadurch gekennzeichnet, daß** die projizierte Fläche (A_{K}) des kolbenartigen Abschlußbereichs (6) in seiner Verschieberichtung (R) einen Anteil von mindestens 0,5 %, vorzugsweise mindestens 5 %, der projizierten Fläche (A_{G}) der gesamten Kavitätswand (7) in der Verschieberichtung (R) beträgt.

## Claims

1. Process for injection-moulding of plastic mouldings, in which plastic melt is injected into an injection-moulding die (1) to form a plastic moulding, wherein the process has the steps:
a) plastifying plastic material in a plastifying unit (2) and collecting the plastic melt in a first melt-collecting chamber (3), wherein the first collecting chamber (3) is arranged within the plastifying unit (2);
b) expelling the accumulated plastic melt along a melt flow path (4) into a second melt-collecting chamber (5), which is defined by a piston-like closing region (6), wherein the second melt-collecting chamber (4) is arranged in an injection-moulding die (1) and the piston-like closing region (6) is part of the plastifying unit (2);
c) expelling the plastic melt accumulated in the second melt-collecting chamber (5) into the injection-moulding die (1), wherein at the same time further plastifying of plastic material according to process step a) is possible;
wherein the piston-like closing region (6) of the second melt-collecting chamber (5) is displaced during expelling of the plastic melt according to step c) such that it forms a part of the cavity wall (7) of the injection-moulding die (1).

2. Process according to claim 1, **characterised in that** the first melt-collecting chamber (3) is designed as a screw antechamber of a reciprocating screw-plastifying and injection unit (2), wherein the reciprocating screw (8) executes an intermittent axial movement.

3. Process according to claim 1, **characterised in that** the first melt-collecting chamber (3) is designed as a melt storage chamber, which is in fluid connection with a plastifying screw at least at times and may be expelled from the melt by moving a piston.

4. Process according to one of claims 1 to 3, **characterised in that** the piston-like closing region (6) of the second melt-collecting chamber (5) is situated in an end position (9) before the start of expelling of the plastic melt into the injection-moulding die (1).

5. Process according to one of claims 1 to 4, **characterised in that** expelling of the accumulated plastic melt along the melt flow path (4) into the second melt-collecting chamber (4) and/or expelling of the plastic melt accumulated in the second melt-collecting chamber (5) into the injection-moulding die (1) takes place in controlled or regulated manner at least at times.

6. Process according to claim 5, **characterised in that** regulation of expelling of the accumulated plastic melt along the melt flow path (4) into the second melt-collecting chamber (5) and expelling of the plastic melt accumulated in the second melt-collecting chamber (5) into the injection-moulding die (1) according to the cross-sectional ratios of the piston or of the screw (8) takes place in the first melt-collecting chamber (3) and the piston-like closing region (6).

7. Process according to claim 5 or 6, **characterised in that** regulation or control takes place as a function of the melt pressure in the first (3) or second (5) melt-collecting chamber.

8. Process according to one of claims 5 to 7, **characterised in that** regulation or control is effected depending on time, path or pressure.

9. Process according to one of claims 1 to 8, **characterised in that** the dwell pressure is applied to the melt after expelling the plastic melt accumulated in the second melt-collecting chamber (5) into the injection-moulding die (1) via the piston-like closing region (6) of the second melt-collecting chamber (5).

10. Process according to one of claims 1 to 9, **characterised in that** the region of the piston-like closing region (6) of the second melt-collecting chamber (5) is tempered at least at times.

11. Process according to one of claims 1 to 10, **characterised in that** during expelling of the plastic melt accumulated in the second melt-collecting chamber (5) into the injection-moulding die (1), a film positioned there is injected behind.

12. Process according to one of claims 1 to 10, **characterised in that** during expelling of the plastic melt accumulated in the second melt-collecting chamber (5) into the injection-moulding die (1), a textile material positioned there is inj ected behind.

13. Process according to one of claims 1 to 12, **characterised in that** after expelling the plastic melt accumulated in the second melt-collecting chamber (5) into the injection-moulding die (1), an embossing step is executed by the piston-like closing region (6).

14. Device for injection-moulding of plastic mouldings, in particular for carrying out the process according to one of claims 1 to 13, which has:
- a plastifying unit (2) for plastifying plastic material,
- a first melt-collecting chamber (3), in which the plastic melt produced by the plastifying unit (2) is collected, wherein the first collecting chamber (3) is arranged within the plastifying unit (2) and
- an injection-moulding die (1) having a die cavity (10),
**characterised by**
- a melt flow path (4), which leads from the first melt-collecting chamber (3) to a second melt-collecting chamber (5), wherein the second melt-collecting chamber (5) is defined by a piston-like closing region (6), wherein the second melt-collecting chamber (4) is arranged in an injection-moulding die (1) and the piston-like closing region (6) is part of the plastifying unit (2),
wherein the piston-like closing region (6) of the second melt-collecting chamber (5) is shaped so that it forms at least a part of the cavity wall (7) of the injection-moulding die (1).

15. Device according to claim 14, **characterised in that** means for tempering (11) are arranged in the region of the piston-like closing region (6) of the second melt-collecting chamber (5).

16. Device according to claim 14 or 15, **characterised in that** the first melt-collecting chamber (3) is designed as a screw antechamber of a reciprocating screw-plastifying and injection unit (2).

17. Device according to claim 14 or 15, **characterised in that** the first melt-collecting chamber (3) is designed as a melt storage chamber, which is connected to a plastifying screw via a fluid conduit.

18. Device according to one of claims 14 to 17, **characterised in that** valve means (12), with which the fluid connection (4) may be interrupted and released, are arranged in the melt flow path (4), which leads from the first melt-collecting chamber (3) to the second melt-collecting chamber (5).

19. Device according to one of claims 14 to 18, **characterised in that** the piston-like closing region (6) of the second melt-collecting chamber (5) is designed as an end piece of a screw cylinder (13), in which a plastifying and reciprocating screw (8), arranged to be axially displaceable in the latter, is arranged.

20. Device according to claim 19, **characterised in that** the screw cylinder (13) is connected to movement means (14), with which the screw cylinder (13) may be moved relative to the injection-moulding die (1).

21. Device according to one of claims 14 to 20, **characterised in that** the projected surface (A_{K}) of the piston-like closing region (6) in its displacement direction (R) is a portion of at least 0.5 %, preferably at least 5 %, of the projected surface (A_{G}) of the entire cavity wall (7) in the displacement direction (R).

## Revendications

1. Procédé de moulage par injection de pièces en matière plastique, dans lequel la matière plastique en fusion est injectée dans un outil de moulage par injection (1) pour former une pièce moulée en matière plastique, le procédé comprenant les étapes suivantes :
a) ramollissement du matériau en matière plastique dans une unité de plastification (2) et rassemblement de la matière plastique en fusion dans un premier espace de collecte de matière en fusion (3), le premier espace de collecte (3) étant disposé à l'intérieur de l'unité de plastification (2) ;
b) expulsion de la matière plastique en fusion accumulée le long d'une voie d'écoulement de matière en fusion (4) dans un deuxième espace de collecte de matière en fusion (5), qui est limité par une région de fermeture de type piston (6), le deuxième espace de collecte de matière en fusion (5) étant disposé dans un outil de moulage par injection (1) et la région de fermeture de type piston (6) faisant partie de l'unité de plastification (2) ;
c) expulsion de la matière plastique en fusion accumulée dans le deuxième espace de collecte de matière en fusion (5) dans l'outil de moulage par injection (1), un ramollissement supplémentaire simultané de la matière plastique suivant l'étape de procédé a) étant possible ;
la région de fermeture de type piston (6) du deuxième espace de collecte de matière en fusion (5) étant poussée lors de l'expulsion de la matière plastique en fusion suivant l'étape c) de telle sorte qu'elle forme une partie de la paroi de la cavité (7) de l'outil de moulage par injection (1).

2. Procédé selon la revendication 1, **caractérisé en ce que** le premier espace de collecte de matière en fusion (3) est réalisé sous forme d'espace antérieur à vis sans fin d'une unité de plastification et d'injection à vis-piston (2), la vis-piston (8) effectuant un mouvement axial intermittent.

3. Procédé selon la revendication 1, **caractérisé en ce que** le premier espace de collecte de matière en fusion (3) est réalisé sous forme d'espace de stockage de matière en fusion, qui est en communication au moins partiellement fluidique avec une vis préplastificatrice et hors duquel la matière en fusion peut être expulsée par déplacement d'un piston.

4. Procédé selon l'une quelconque des revendications 1 à 3, **caractérisé en ce que** la région de fermeture de type piston (6) du deuxième espace de collecte de matière en fusion (5) se trouve dans une position terminale (9), avant le commencement de l'expulsion de la matière plastique en fusion dans l'outil de moulage par injection (1).

5. Procédé selon l'une quelconque des revendications 1 à 4, **caractérisé en ce que** l'expulsion de la matière plastique en fusion accumulée le long de la voie d'écoulement de matière en fusion (4) dans le deuxième espace de collecte de matière en fusion (5) et/ou l'expulsion de la matière plastique en fusion accumulée dans le deuxième espace de collecte de matière en fusion (5) dans l'outil de moulage par injection (1) s'effectue de manière au moins commandée ou régulée dans le temps.

6. Procédé selon la revendication 5, **caractérisé en ce que** la régulation de l'expulsion de la matière plastique en fusion accumulée le long de la voie d'écoulement de matière en fusion (4) dans le deuxième espace de collecte de matière en fusion (5) et l'expulsion de la matière plastique en fusion accumulée dans le deuxième espace de collecte de matière en fusion (5) dans l'outil de moulage par injection (1) s'effectue en fonction des rapports de section transversale du piston ou de la vis sans fin (8) dans le premier espace de collecte de matière en fusion (3) et dans la région de fermeture de type piston (6).

7. Procédé selon la revendication 5 ou 6, **caractérisé en ce que** la régulation ou la commande s'effectue en fonction de la pression de la matière en fusion dans le premier (3) ou dans le deuxième (5) espace de collecte de matière en fusion.

8. Procédé selon l'une quelconque des revendications 5 à 7, **caractérisé en ce que** la régulation ou la commande s'effectue en fonction du temps, de la distance ou de la pression.

9. Procédé selon l'une quelconque des revendications 1 à 8, **caractérisé en ce que** le maintien en pression de la matière en fusion est appliqué après l'expulsion de la matière plastique en fusion accumulée dans le deuxième espace de collecte de matière en fusion (5) dans l'outil de moulage par injection (1) par le biais de la région de fermeture de type piston (6) du deuxième espace de collecte de matière en fusion (5).

10. Procédé selon l'une quelconque des revendications 1 à 9, **caractérisé en ce que** la région de la région de fermeture de type piston (6) du deuxième espace de collecte de matière en fusion (5) est au moins temporairement équilibrée en température.

11. Procédé selon l'une quelconque des revendications 1 à 10, **caractérisé en ce que** lors de l'expulsion de la matière plastique en fusion accumulée dans le deuxième espace de collecte de matière en fusion (5) dans l'outil de moulage par injection (1), une feuille s'y trouvant est revêtue par injection.

12. Procédé selon l'une quelconque des revendications 1 à 10, **caractérisé en ce que** lors de l'expulsion de la matière plastique en fusion accumulée dans le deuxième espace de collecte de matière en fusion (5) dans l'outil de moulage par injection (1), un matériau textile s'y trouvant est revêtu par injection.

13. Procédé selon l'une quelconque des revendications 1 à 12, **caractérisé en ce qu'**après l'expulsion de la matière plastique en fusion accumulée dans le deuxième espace de collecte de matière en fusion (5) dans l'outil de moulage par injection (1) par la région de fermeture de type piston (6), une opération de compression est réalisée.

14. Dispositif de moulage par injection de pièces en matières plastique, notamment pour la mise en oeuvre du procédé selon l'une quelconque des revendications 1 à 13, qui présente :
- une unité de plastification (2) pour le ramollissement de matériau en matière plastique,
- un premier espace de collecte de matière en fusion (3), dans lequel la matière plastique en fusion produite par l'unité de plastification (2) est rassemblée, le premier espace de collecte (3) étant disposé à l'intérieur de l'unité de plastification (2) et
- un outil de moulage par injection (1) avec une cavité d'outil (10),
**caractérisé par**
- une voie d'écoulement de matière en fusion (4), qui conduit du premier espace de collecte de matière en fusion (3) à un deuxième espace de collecte de matière en fusion (5), le deuxième espace de collecte de matière en fusion (5) étant limité par une région de fermeture de type piston (6), le deuxième espace de collecte de matière en fusion (5) étant disposé dans un outil de moulage par injection (1) et la région de fermeture de type piston (6) faisant partie de l'unité de plastification (2),
la région de fermeture de type piston (6) du deuxième espace de collecte de matière en fusion (5) étant formée de telle sorte qu'elle forme au moins une partie de la paroi de la cavité (7) de l'outil de moulage par injection (1).

15. Dispositif selon la revendication 14, **caractérisé en ce que** dans la région de la région de fermeture de type piston (6) du deuxième espace de collecte de matière en fusion (5) sont disposés des moyens pour un équilibrage en température (11).

16. Dispositif selon la revendication 14 ou 15, **caractérisé en ce que** le premier espace de collecte de matière en fusion (3) est réalisé sous forme d'espace antérieur à vis sans fin d'une unité de plastification et d'injection à vis-piston (2).

17. Dispositif selon la revendication 14 ou 15, **caractérisé en ce que** le premier espace de collecte de matière en fusion (3) est réalisé sous forme d'espace de stockage de matière en fusion, qui est en communication par le biais d'une conduite fluidique avec une vis préplastificatrice.

18. Dispositif selon l'une quelconque des revendications 14 à 17, **caractérisé en ce que** des moyens de soupape (12), avec lesquels la liaison fluidique (4) peut être interrompue et libérée, sont disposés dans la voie d'écoulement de matière en fusion (4) qui conduit du premier espace de collecte de matière en fusion (3) au deuxième espace de collecte de matière en fusion (5).

19. Dispositif selon l'une quelconque des revendications 14 à 18, **caractérisé en ce que** la région de fermeture de type piston (6) du deuxième espace de collecte de matière en fusion (5) est réalisée sous forme de pièce de bout d'un cylindre à vis sans fin (13) dans lequel est disposée une vis-piston préplastificatrice (8) disposée de manière à pouvoir coulisser axialement dans celui-ci.

20. Dispositif selon la revendication 19, **caractérisé en ce que** le cylindre à vis sans fin (13) est en liaison avec des moyens de déplacement (14) avec lesquels le cylindre à vis sans fin (13) peut être déplacé par rapport à l'outil de moulage par injection (1).

21. Dispositif selon l'une quelconque des revendications 14 à 20, **caractérisé en ce que** la surface projetée (A_{K}) de la région de fermeture de type piston (6) représente, dans sa direction de déplacement (R), une proportion d'au moins 0,5%, de préférence d'au moins 5% de la surface projetée (A_{G}) de l'ensemble de la paroi de la cavité (7) dans la direction de déplacement (R).
